(19) 

Europäisches Patentamt

European Patent Office

Office européen des brevets

(11) **EP 4 746 555 A1**

(12) **EUROPEAN PATENT APPLICATION**
published in accordance with Art. 153(4) EPC

(43) Date of publication:
**20.05.2026  Bulletin 2026/21**

(21) Application number: **24851112.3**

(22) Date of filing: **09.08.2024**

(51) International Patent Classification (IPC):
**H04W 72/0453** (2023.01)

(52) Cooperative Patent Classification (CPC):
**H04W 52/02; H04W 72/0453; H04W 74/08;
H04W 74/0833**

(86) International application number:
**PCT/CN2024/110876**

(87) International publication number:
**WO 2025/031467 (13.02.2025 Gazette 2025/07)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **10.08.2023  CN 202311010367**

(71) Applicant: **Huawei Technologies Co., Ltd.
Shenzhen, Guangdong 518129 (CN)**

(72) Inventors:
• **HOU, Hailong
  Shenzhen, Guangdong 518129 (CN)**
• **GUO, Zhiheng
  Shenzhen, Guangdong 518129 (CN)**

(74) Representative: **MERH-IP Matias Erny Reichl
Hoffmann
Patentanwälte PartG mbB
Paul-Heyse-Straße 29
80336 München (DE)**

(54) **COMMUNICATION METHOD AND APPARATUS**

(57)     This application relates to a communication method and apparatus. A terminal device may receive, based on at least two candidate frequency positions of M candidate frequency positions, at least two SSBs in a synchronization burst set from a network device. In other words, different SSBs in the synchronization burst set are sent in a frequency division manner. In this way, time taken by the terminal device for SSB search can be reduced, so that the terminal device can perform synchronization based on a found SSB more quickly and initiate random access, and therefore, an access delay can be reduced. In addition, as the network device sends different SSBs in the synchronization burst set in the frequency division manner, the network device may complete sending the SSBs in the synchronization burst set in shorter time. In this way, the network device can be shut down in shorter time as required, so that energy consumption of the network device can be reduced, thereby facilitating energy saving of the network device.

Terminal device                    Network device

301: Determine M candidate frequency positions, where one of the M candidate frequency positions is used to transmit one SSB in a synchronization burst set, the synchronization burst set includes N SSBs, and both M and N are integers greater than or equal to 2

302: Determine the M candidate frequency positions

303: Send, in at least two candidate frequency positions of the M candidate frequency positions, at least two SSBs of the N SSBs to the terminal device, where the at least two SSBs are associated with different index values

FIG. 3

## Description

This application claims priority to Chinese Patent Application No. 202311010367.7, filed with the China National Intellectual Property Administration on August 10, 2023 and entitled "COMMUNICATION METHOD AND APPARATUS", which is incorporated herein by reference in its entirety.

## TECHNICAL FIELD

This application relates to the field of communication technologies, and in particular, to a communication method and apparatus.

## BACKGROUND

To improve synchronization signal block (synchronization signal block, SSB) coverage performance, a beam sweeping (beam sweeping) mechanism is introduced into new radio (new radio, NR) to perform SSB transmission. In other words, a network device may repeatedly perform SSB transmission in different directions through different beams. For a beam direction, as energy is more concentrated, an SSB receive power may be higher for a terminal device, so that the SSB coverage performance is improved. For the foregoing beam-based SSB transmission process, time division multiplexing is performed between different SSB beams, that is, the network device sends SSBs at different time through different beams. This means that the terminal device also needs to perform SSB search at different time through different beams to obtain an appropriate SSB through detection. In this way, the terminal device can perform synchronization based on the SSB, to initiate random access. However, time consumed in a process of performing SSB search at different time through different beams to obtain the appropriate SSB through detection is long. Consequently, an access delay of the terminal device is long.

## SUMMARY

This application provides a communication method and apparatus, to reduce time taken by a terminal device for SSB search, so that the terminal device can perform synchronization based on a found SSB more quickly and initiate random access, and therefore, an access delay of the terminal device can be reduced.

According to a first aspect, a communication method is provided. The method may be performed by a terminal device, or may be performed by a module (for example, a processor, a chip, or a chip system) used in the terminal device, or may be implemented by a logical node, a logical module, or software that can implement all or some functions of the terminal device. In the communication method, M candidate frequency positions are determined, where one of the M candidate frequency positions is used to transmit one synchronization signal block SSB in a synchronization burst set, the synchronization burst set includes N SSBs, and both M and N are integers greater than or equal to 2. In this case, at least two SSBs of the N SSBs from a network device can be received based on at least two candidate frequency positions of the M candidate frequency positions, and the at least two SSBs are associated with different index values.

It can be learned that in the foregoing implementation, the terminal device may receive, based on the at least two candidate frequency positions of the M candidate frequency positions, the at least two SSBs in the synchronization burst set from the network device. In other words, different SSBs (a plurality of SSBs are associated with different index values, indicating different SSBs) in the synchronization burst set are sent in a frequency division manner. In this way, time taken by the terminal device for SSB search can be reduced, so that the terminal device can perform synchronization based on a found SSB more quickly and initiate random access, and therefore, an access delay can be reduced. In addition, as the network device sends different SSBs in the synchronization burst set in the frequency division manner, the network device may complete sending the SSBs in the synchronization burst set in shorter time. In this way, the network device can be shut down in shorter time as required, so that energy consumption of the network device can be reduced, thereby facilitating energy saving of the network device.

With reference to the first aspect, optionally, that the at least two SSBs of the N SSBs from the network device are received based on the at least two candidate frequency positions of the M candidate frequency positions includes: receiving, based on the at least two candidate frequency positions and at least two candidate time-domain positions, the at least two SSBs from the network device.

It can be learned that in the foregoing implementation, the terminal device may receive, based on the at least two candidate frequency positions and the at least two candidate time-domain positions, the at least two SSBs from the network device. In other words, different SSBs in the synchronization burst set are sent in the frequency division manner and a time division manner. In this way, in a scenario in which a carrier bandwidth is limited (a quantity of frequency division-based SSBs is limited in this scenario), a cell is enabled to support more SSBs, thereby improving SSB coverage performance.

According to a second aspect, a communication method is provided. The method may be performed by a network device, or may be performed by a module (for example, a processor, a chip, or a chip system) used in the network device, or may be implemented by a logical node, a logical module, or software that can implement all or some functions of the network device. In the communication method, M candidate frequency positions are determined, where one of the M candidate frequency positions is used to transmit one synchronization signal block SSB in a synchronization burst set, the synchronization burst set includes N SSBs, and both M and N are integers greater than or equal to 2. In this case, in at least two candidate frequency positions of the M candidate frequency positions, at least two SSBs of the N SSBs can be sent to a terminal device, and the at least two SSBs are associated with different index values.

It can be learned that in the foregoing implementation, the network device may send, in the at least two candidate frequency positions of the M candidate frequency positions, the at least two SSBs in the synchronization burst set to the terminal device. In other words, different SSBs in the synchronization burst set are sent in a frequency division manner. In this way, time taken by the terminal device for SSB search can be reduced, so that the terminal device can perform synchronization based on a found SSB more quickly and initiate random access, and therefore, an access delay can be reduced. In addition, as the network device sends different SSBs in the synchronization burst set in the frequency division manner, the network device may complete sending the SSBs in the synchronization burst set in shorter time. In this way, the network device can be shut down in shorter time as required, so that energy consumption of the network device can be reduced, thereby facilitating energy saving of the network device.

With reference to the second aspect, optionally, that in the at least two candidate frequency positions of the M candidate frequency positions, the at least two SSBs of the N SSBs are sent to the terminal device includes: sending, in the at least two candidate frequency positions and at least two candidate time-domain positions, the at least two SSBs to the terminal device.

It can be learned that in the foregoing implementation, the network device may send, in the at least two candidate frequency positions and the at least two candidate time-domain positions, the at least two SSBs to the terminal device. In other words, different SSBs in the synchronization burst set are sent in the frequency division manner and a time division manner. In this way, in a scenario in which a carrier bandwidth is limited (a quantity of frequency division-based SSBs is limited in this scenario), a cell is enabled to support more SSBs, thereby improving SSB coverage performance.

With reference to the first aspect or the second aspect, optionally, the M candidate frequency positions are associated with M synchronization raster (synchronization raster) positions, or the M candidate frequency positions are associated with one synchronization raster position.

With reference to the first aspect or the second aspect, optionally, that the M candidate frequency positions are associated with one synchronization raster position includes: A first candidate frequency position of the M candidate frequency positions is associated with one synchronization raster position, and M-1 candidate frequency positions of the M candidate frequency positions other than the first candidate frequency position are determined based on the first candidate frequency position and/or frequency spacing between adjacent candidate frequency positions of the M candidate frequency positions. The frequency spacing between adjacent candidate frequency positions of the M candidate frequency positions is predefined, or the frequency spacing between adjacent candidate frequency positions of the M candidate frequency positions is indicated by the network device to the terminal device.

With reference to the first aspect or the second aspect, optionally, when M is an odd number, the first candidate frequency position is an $[(M+1)/2]^{th}$ candidate frequency position of the M candidate frequency positions; and/or when M is an even number, the first candidate frequency position is an $(M/2)^{th}$ candidate frequency position or an $(M/2+1)^{th}$ candidate frequency position of the M candidate frequency positions. In such a design, an intermediate SSB of a plurality of SSBs that can be multiplexed in the frequency division manner can be enabled to be located at a predefined frequency position, to help the terminal device adjust an operating frequency range of a radio frequency link of the terminal device when SSB search and detection are performed, thereby reducing complexity of the terminal device.

With reference to the first aspect or the second aspect, optionally, a resource element (resource element, RE) of an SSB in the synchronization burst set is located at one of the M candidate frequency positions, and the RE is a central RE of the SSB in the synchronization burst set, a $1^{st}$ RE of the SSB in the synchronization burst set, or a last RE of the SSB in the synchronization burst set.

With reference to the first aspect or the second aspect, optionally, a maximum quantity of frequency division-based SSBs in the synchronization burst set is determined based on a frequency range to which the M candidate frequency positions belong.

With reference to the first aspect or the second aspect, optionally, the M candidate frequency positions belong to a first set, and a candidate frequency position in the first set satisfies the following formula: F1 + L1 * First frequency spacing + K1 * Second frequency spacing, where F1 is a reference frequency position of a frequency range to which the candidate frequency positions in the first set belong, L1 is an integer greater than or equal to 0, K1 is an integer greater than or equal to 0, and the first frequency spacing is different from the second frequency spacing.

With reference to the first aspect or the second aspect, optionally, a size of the first frequency spacing is greater than a bandwidth of an SSB in the synchronization burst set, and/or a size of the second frequency spacing is greater than or equal to a bandwidth of an SSB in the synchronization burst set.

With reference to the first aspect or the second aspect, optionally, the M candidate frequency positions belong to a second set, and a candidate frequency position in the second set satisfies the following formula: F2 + L2 * Third frequency spacing, where F2 is a reference frequency position of a frequency range to which the candidate frequency positions in the second set belong, and L2 is an integer greater than or equal to 0.

With reference to the first aspect or the second aspect, optionally, a size of the third frequency spacing is greater than or equal to a bandwidth of an SSB in the synchronization burst set.

With reference to the first aspect or the second aspect, optionally, the SSBs in the synchronization burst set are consecutively mapped to a pattern of candidate time-frequency positions of the SSBs in the synchronization burst set firstly in ascending order of indexes of frequency-domain units and then in ascending order of indexes of time units; or the SSBs in the synchronization burst set are consecutively mapped to a pattern of candidate time-frequency positions of the SSBs in the synchronization burst set firstly in ascending order of indexes of time units and then in ascending order of indexes of frequency-domain units. The pattern of the candidate time-frequency positions of the SSBs in the synchronization burst set is predefined or preconfigured, or the pattern of the candidate time-frequency positions of the SSBs in the synchronization burst set is indicated by the network device to the terminal device.

With reference to the first aspect or the second aspect, optionally, a period of an SSB in the synchronization burst set is the same as or different from a period of the synchronization burst set.

With reference to the first aspect or the second aspect, optionally, the period of the SSB in the synchronization burst set is the same as the period of the synchronization burst set, and both the period of the SSB in the synchronization burst set and the period of the synchronization burst set are less than 5 milliseconds.

With reference to the first aspect or the second aspect, optionally, the period of the SSB in the synchronization burst set is different from the period of the synchronization burst set, the period of the synchronization burst set is greater than or equal to 5 milliseconds, and the period of the SSB in the synchronization burst set is less than 5 milliseconds.

According to a third aspect, a communication apparatus is provided, and includes units or modules configured to implement the method according to either the first aspect or the second aspect.

According to a fourth aspect, a communication apparatus is provided, where the communication apparatus includes at least one processor and a memory. The memory is configured to store a computer program or instructions, and the at least one processor is configured to execute the computer program or the instructions in the memory, to perform the method according to either the first aspect or the second aspect.

According to a fifth aspect, a communication system is provided, where the communication system includes a terminal device and a network device. The terminal device is configured to perform the method according to the first aspect, and the network device is configured to perform the method according to the second aspect.

According to a sixth aspect, a computer-readable storage medium is provided, where the computer-readable storage medium stores computer instructions. When the computer instructions are executed, a computer is enabled to perform the method according to either the first aspect or the second aspect.

According to a seventh aspect, a computer program product is provided, where the computer program product includes computer program code. When the computer program code is run by a computer, the computer is enabled to perform the method according to either the first aspect or the second aspect.

According to an eighth aspect, a chip is provided, where the chip includes at least one processor and an interface. The processor is configured to read and execute instructions stored in a memory. When the instructions are run, the chip is enabled to perform the method according to either the first aspect or the second aspect.

## BRIEF DESCRIPTION OF DRAWINGS

The following briefly describes accompanying drawings used for describing embodiments.

FIG. 1 shows a basic architecture of a communication system according to an embodiment of this application;
FIG. 2 is a diagram of a time-frequency resource occupied by an SSB;
FIG. 3 is a schematic flowchart of a communication method according to an embodiment of this application;
FIG. 4 is a diagram of determining a candidate frequency position according to an embodiment of this application;
FIG. 5 is another diagram of determining a candidate frequency position according to an embodiment of this application;
FIG. 6 is a diagram of patterns of candidate frequency positions of SSBs according to an embodiment of this application;
FIG. 7 is a diagram of selecting candidate frequency positions of SSBs according to an embodiment of this application;
FIG. 8 is a diagram of a structure of a communication apparatus according to an embodiment of this application; and
FIG. 9 is a diagram of a structure of another communication apparatus according to an embodiment of this application.

## DESCRIPTION OF EMBODIMENTS

The following describes the technical solutions in embodiments of this application with reference to the accompanying drawings in embodiments of this application. The terms "system" and "network" may be used interchangeably in embodiments of this application. Unless otherwise specified, "/" represents an "or" relationship between associated objects. For example, A/B may represent A or B. The term "and/or" in this application is merely an association relationship for describing associated objects, and represents that three relationships may exist. For example, A and/or B may represent the following three cases: Only A exists, both A and B exist, and only B exists, where A and B each may be singular or plural. In addition, in the descriptions of this application, "a plurality of" means two or more than two unless otherwise specified. "At least one of the following items (pieces)" or a similar expression thereof means any combination of these items, including a singular item (piece) or any combination of plural items (pieces). For example, at least one of a, b, or c may indicate: a, b, c, a and b, a and c, b and c, or a, b, and c, where a, b, and c may be singular or plural. In addition, to clearly describe the technical solutions in embodiments of this application, terms such as "first" and "second" are used in embodiments of this application to distinguish between same items or similar items that provide basically same network elements and purposes. A person skilled in the art may understand that the terms such as "first" and "second" do not limit a quantity or an execution sequence, and the terms such as "first" and "second" do not indicate a definite difference.

Reference to "an embodiment", "some embodiments", or the like described in embodiments of this application means that one or more embodiments of this application include a specific feature, structure, or characteristic described with reference to embodiments. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner. The terms "include", "have", and their variants all mean "include but are not limited to", unless otherwise specifically emphasized in another manner.

The objectives, technical solutions, and beneficial effects of this application are further described in detail in the following specific implementations. It should be understood that the following descriptions are merely specific implementations of this application, but are not intended to limit the protection scope of this application. Any modification, equivalent replacement, improvement, or the like made based on the technical solutions of this application shall fall within the protection scope of this application.

In various embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

It should be understood that the technical solutions in embodiments of this application may be applied to a long term evolution (long term evolution, LTE) architecture, a 5th generation mobile communication technology (5th generation mobile networks, 5G), a wireless local area network (wireless local area network, WLAN) system, a vehicle-to-everything (vehicle-to-everything, V2X) communication system, LTE-vehicle (LTE-vehicle, LTE-V), vehicle-to-vehicle (vehicle-to-vehicle, V2V), Internet of vehicles, machine type communication (machine type communication, MTC), and the like. The technical solutions in embodiments of this application may be further applied to another future communication system, for example, a 6G communication system. In a future communication system, a same function may be maintained, but a name may be changed. In addition, the technical solutions in embodiments of this application may be further applied to a non-terrestrial network (non-terrestrial network, NTN) or a scenario in which an NTN and a terrestrial network (terrestrial network, TN) are integrated.

The following describes a basic architecture of a communication system provided in embodiments of this application. The communication system provided in this application may include one or more network devices and one or more terminal devices.

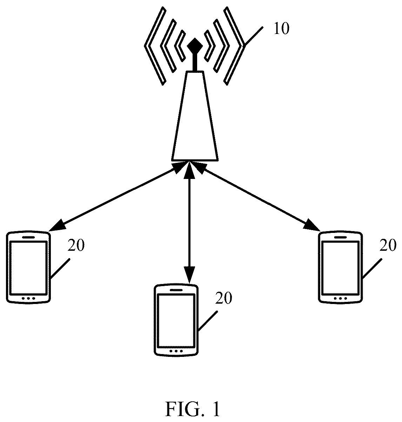

The following uses a system architecture shown in FIG. 1 as an example for description. As shown in FIG. 1, the communication system includes a network device 10 and one or more terminal devices (for example, a terminal device 20 in FIG. 1) communicating with the network device 10.

It should be noted that quantities of network devices and terminal devices in FIG. 1 are merely examples, and should not be considered as a specific limitation on this application. The following describes in detail the terminal device and the network device that are related to the system architecture.

1. Terminal device

A terminal device is an entity that is on a user side and that is configured to receive a signal, or send a signal, or receive a signal and send a signal. The terminal device is configured to provide one or more of a voice service and a data connectivity service for a user. The terminal device may be a device that has a wireless transceiver function and that may cooperate with a network device to provide a communication service for the user. Specifically, the terminal device may be user equipment (user equipment, UE), an access terminal, a subscriber unit, a subscriber station, a mobile station, a remote station, a remote terminal, a mobile device, a terminal, a wireless communication device, a user agent, a user apparatus, or a road side unit (road side unit, RSU). The terminal device may alternatively be an unmanned aerial vehicle, an Internet of things (Internet of things, IoT) device, a station (station, ST) in a wireless local area network (wireless local area network, WLAN), a cellular phone (cellular phone), a smartphone (smartphone), a cordless phone, a wireless data card, a tablet computer, a session initiation protocol (session initiation protocol, SIP) phone, a wireless local loop (wireless local loop, WLL) station, a personal digital assistant (personal digital assistant, PDA) device, a laptop computer (laptop computer), a machine type communication (machine type communication, MTC) terminal, a handheld device with a wireless communication function, a compute device or another processing device connected to a wireless modem, a vehicle-mounted device, a wearable device (also referred to as a wearable smart device), a virtual reality (virtual reality, VR) terminal, an augmented reality (augmented reality, AR) terminal, a wireless terminal in telemedicine (remote medical), a wireless terminal in industrial control (industrial control), a wireless terminal in self driving (self driving), a wireless terminal in a smart grid (smart grid), a wireless terminal in transportation safety (transportation safety), a wireless terminal in a smart city (smart city), a wireless terminal in a smart home (smart home), or the like. The terminal device may alternatively be a terminal in a 5G system, or a terminal in a next-generation communication system. This is not limited in embodiments of this application.

In embodiments of this application, a device form of the terminal device is not limited. An apparatus configured to implement a function of the terminal device may be a terminal device, or may be an apparatus, for example, a chip system, that can support the terminal device in implementing the function. The apparatus may be mounted in a terminal device or used in a manner of matching a terminal device. In embodiments of this application, the chip system may include a chip, or may include a chip and another discrete component.

2. Network device

A network device is an entity that is on a network side and that is configured to send a signal, or receive a signal, or send a signal and receive a signal. The network device may be an apparatus deployed in a radio access network (radio access network, RAN) to provide a wireless communication function for the terminal device.

In a possible scenario, the network device may be a device having a base station function, for example, an evolved NodeB (evolved NodeB, eNodeB), a transmission reception point (transmitting and receiving point, TRP), a transmission point (transmitting point, TP), a next generation NodeB (next generation NodeB, gNB), a next generation base station in a 6G mobile communication system, an integrated access and backhaul (integrated access and backhaul, IAB) node, or a non-terrestrial network device in an NTN, that is, a device or a satellite that can be deployed on a high-altitude platform, or the like. The network device may be a transmission reception point (transmission reception point, TRP), a base station, or a control node in various forms, for example, a network controller, a radio controller, or the like. Specifically, the network device may be a macro base station in various forms, a micro base station (also referred to as a small cell) in a heterogeneous network (heterogeneous network, HetNet) scenario, a relay station, an access point (access point, AP), a radio network controller (radio network controller, RNC), a NodeB (NodeB, NB), a base station controller (base station controller, BSC), a base transceiver station (base transceiver station, BTS), a home base station (for example, a home evolved NodeB or a home NodeB, HNB), a baseband unit (baseband unit, BBU) and a radio unit (remote radio unit, RRU) in a distributed base station scenario, a transmission point (transmitting and receiving point, TRP), a transmission point (transmitting point, TP), a mobile switching center, or the like, or may be an antenna panel of a base station. The control node may be connected to a plurality of base stations, and configure resources for a plurality of terminals covered by the plurality of base stations. In systems using different radio access technologies, names of devices having a function of a base station may vary. For example, the device may be a gNB in 5G, a network side device in a network after 5G, a network device in a future evolved public land mobile (communication) network (public land mobile network, PLMN) network, or a device having a base station function in device-to-device (device-to-device, D2D) communication, machine-to-machine (machine-to-machine, M2M) communication, or Internet of vehicles communication. A specific name of the network device is not limited in this application. Alternatively, the network device may be an open access network (open RAN, O-RAN, or ORAN), a baseband pool (BBU pool) and an RRU in a cloud radio access network (cloud radio access network, CRAN), or the like.

All or some functions of the network device in this application may alternatively be implemented through a software function running on hardware, or implemented through a virtualized function instantiated on a platform (for example, a cloud platform). The network device in this application may alternatively be a logical node, a logical module, or software that can implement all or some functions of the network device.

In another possible scenario, a plurality of network devices collaborate to assist the terminal device in implementing wireless access, and different network devices separately implement some functions of the base station. For example, the network device may include a central unit (central unit, CU), a distributed unit (distributed unit, DU), a CU-control plane (control plane, CP), a CU-user plane (user plane, UP), a radio unit (radio unit, RU), or the like. The CU and the DU may be separately arranged, or may be included in a same network element, for example, a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH). It may be understood that the network device may be a CU node, a DU node, or a device including a CU node and a DU node. In addition, the CU may be classified as a network device in an access network RAN, or the CU may be classified as a network device in a core network CN. This is not limited herein.

In different systems, the CU (or the CU-CP and the CU-UP), the DU, or the RU may also have different names, but a person skilled in the art may understand meanings thereof. For example, in an ORAN system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. For ease of description, the CU, the CU-CP, the CU-UP, the DU, and the RU are used as examples for description in this application. Any one of the CU (or the CU-CP or the CU-UP), the DU, and the RU in this application may be implemented by using a software module, a hardware module, or a combination of the software module and the hardware module.

A form of the network device is not limited in embodiments of this application. An apparatus configured to implement a function of the network device may be a network device, or may be an apparatus, for example, a chip system, that can support the network device in implementing the function. The apparatus may be mounted in the network device or used in a manner of matching the network device.

To facilitate understanding of content of the solutions, the following further explains and describes some terms in embodiments of this application, so as to facilitate understanding by a person skilled in the art. This part is merely for ease of understanding, and cannot be considered as a specific limitation on this application.

1. SSB

An SSB may be used for time-frequency synchronization between a terminal device and a network device, to obtain broadcast information, and the like. The broadcast information includes a master information block (master information block, MIB) from a higher layer and timing-related information from a physical layer. The SSB may be further used for at least one of channel quality measurement, radio resource management (radio resource management, RRM) measurement, radio link monitor (radio link monitor, RLM), and the like. The SSB may also be referred to as a physical broadcast channel (physical broadcast channel, PBCH) block (block), and includes a primary synchronisation signal (primary synchronisation signal, PSS), a secondary synchronisation signal (secondary synchronisation signal, SSS), and a PBCH. The terminal device performs time-frequency synchronization with the network device through the PSS and the SSS, to obtain a physical layer cell identifier (physical layer cell ID, PCI) and the like. The PBCH mainly carries the broadcast information.

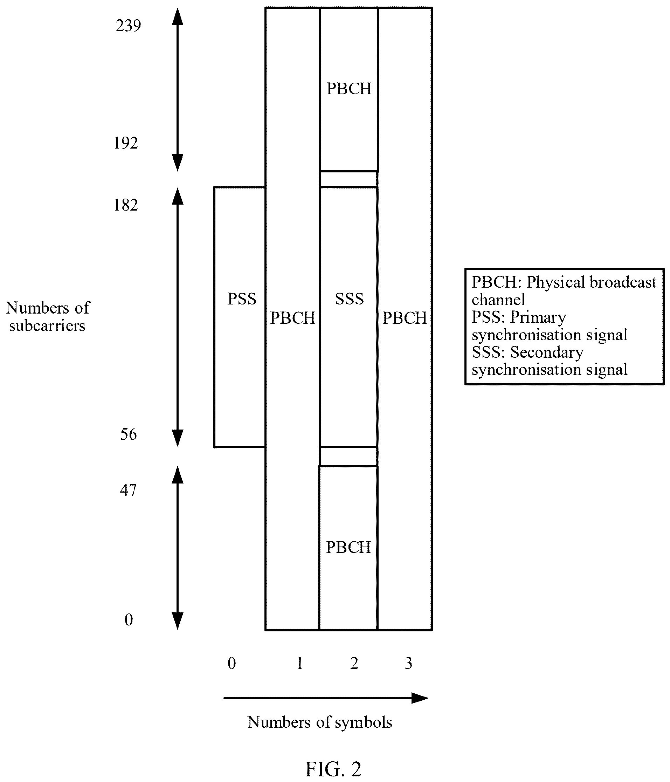

In time domain, one SSB occupies four symbols: a symbol 0 to a symbol 3. In frequency domain, one SSB occupies 20 resource blocks (resource block, RB) (one RB includes 12 subcarriers), that is, 240 subcarriers, and numbers of the subcarriers are 0 to 239. Specifically, as shown in FIG. 2, the PSS is located on intermediate 127 subcarriers of the symbol 0, and the SSS is located on intermediate 127 subcarriers of the symbol 2. To protect the PSS and the SSS, there are respective different guard subcarriers. The guard subcarrier is not used to carry a signal. Subcarriers are separately reserved on two sides of the SSS as guard subcarriers. For example, blank areas on the two sides of the SSS in FIG. 2 are the guard subcarriers. The PBCH occupies all subcarriers of the symbol 1 and the symbol 3, and occupies some subcarriers of remaining subcarriers other than the subcarriers occupied by the SSS in all subcarriers of the symbol 2 (that is, subcarriers other than the guard subcarriers in the remaining subcarriers).

It should be noted that, symbols in this application may be an orthogonal frequency-division multiplexing (orthogonal frequency-division multiplexing, OFDM) symbol. For ease of description, the OFDM symbol is briefly referred to as a symbol below.

The SSB may be classified into a cell-defining SSB (cell-defining SSB, CD-SSB) and a non-cell-defining SSB (non-cell-defining SSB, non-CD-SSB). The CD-SSB may be used for cell search and access. The CD-SSB may be associated with a system information block 1 (system information block 1, SIB 1). To be specific, after receiving the CD-SSB, the terminal device may further receive the SIB 1 associated with the CD-SSB, to perform cell camping, access, and the like. The non-CD-SSB may be used for measurement.

2. RE

In this application, an RE may be a subcarrier on a symbol, and the RE is a minimum physical unit in an NR standard.

3. Time unit

In this application, a time unit may be, for example, a symbol. In this application, an index of the time unit may be used to uniquely identify the time unit. The index of the time unit may have another name, for example, an identifier of the time unit or a number of the time unit. This is not limited in this application.

4. Frequency-domain unit

In this application, a frequency-domain unit may be, for example, a subcarrier. In this application, an index of the frequency-domain unit may be used to uniquely identify the frequency-domain unit. The index of the frequency-domain unit may have another name, for example, an identifier of the frequency-domain unit or a number of the frequency-domain unit. This is not limited in this application.

5. Synchronization burst set (SS burst set)

A set of SSBs sent by a network device in one beam sweeping process may be referred to as a synchronization burst set. The synchronization burst set may include one or more SSBs. Index values (index) associated with different SSBs in the synchronization burst set are different. Bandwidths of all SSBs in the synchronization burst set are the same. Optionally, a bandwidth of an SSB in the synchronization burst set is related to a quantity of RBs occupied by the SSB, a quantity of subcarriers included in the RB, and subcarrier spacing. In other words, the bandwidth of the SSB in the synchronization burst set is determined based on the quantity of RBs occupied by the SSB, the quantity of subcarriers included in the RB, and the subcarrier spacing. For example, the SSB occupies 20 RBs, the RB includes 12 subcarriers, and the subcarrier spacing is 15 kilohertz (kHz). In this case, the bandwidth of the SSB is 15 kHz * 12 * 20 = 3.6 MHz. "*" in this application indicates multiplication.

Generally, the network device may send the SSBs in the synchronization burst set in a time division manner. In this way, the terminal device needs to spend long time in searching for SSBs and obtaining an appropriate SSB through detection. Consequently, an access delay of the terminal device may be long. In addition, for the network device, when the SSBs are sent in different beam directions in a time division multiplexing manner, the network device needs to keep in an operating state for longer time, and consumes more energy. Consequently, it is not conducive to energy saving of the network device. In view of this, this application provides a communication method to resolve these problems.

The following describes embodiments of this application in detail. Specifically, the terminal device in the following may be the terminal device in FIG. 1, and the network device in the following may be the network device in FIG. 1. It should be noted that names of messages between network elements, names of parameters in the messages, or the like in the following embodiments are merely examples, and there may be other names in a specific implementation. This is not specifically limited in embodiments of this application.

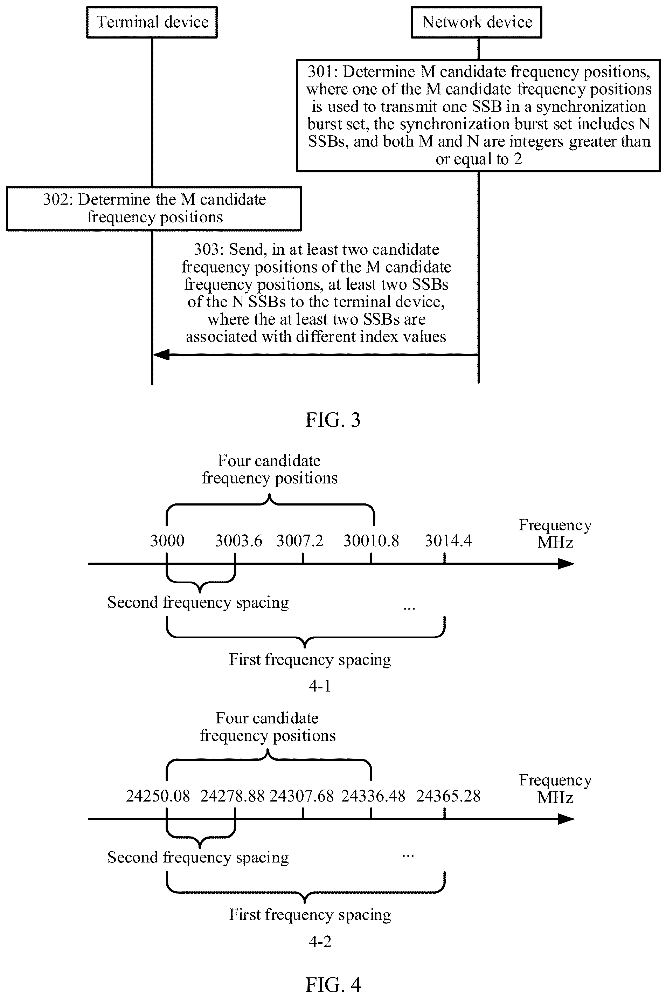

FIG. 3 shows a communication method according to an embodiment of this application. The communication method includes but is not limited to the following steps.

301: A network device determines M candidate frequency positions, where one of the M candidate frequency positions is used to transmit one SSB in a synchronization burst set, the synchronization burst set includes N SSBs, and both M and N are integers greater than or equal to 2.

302: A terminal device determines the M candidate frequency positions.

For the M candidate frequency positions in step 302, refer to related descriptions in step 301. Details are not described herein again.

303: The network device sends, in at least two candidate frequency positions of the M candidate frequency positions, at least two SSBs of the N SSBs to the terminal device, where the at least two SSBs are associated with different index values.

Correspondingly, the terminal device receives the at least two SSBs from the network device based on the at least two candidate frequency positions.

The following describes specific implementations of step 301 to step 303.

In this application, there is an association relationship between the M candidate frequency positions and synchronization raster positions. Details are as follows.

I. The M candidate frequency positions are associated with M synchronization raster positions.
Optionally, the M candidate frequency positions are in one-to-one correspondence with the M synchronization raster positions. The one-to-one correspondence (that is, the one-to-one correspondence between the M candidate frequency positions and the M synchronization raster positions) may be predefined or preconfigured. Synchronization rasters may define candidate frequency positions of SSBs. It should be noted that, the predefined mentioned in this application refers to being predefined in a protocol, and the preconfigured mentioned in this application refers to information recorded in hardware and/or software in the terminal device or the network device.
II. The M candidate frequency positions are associated with one synchronization raster position.

Optionally, the network device or the terminal device may determine the M candidate frequency positions in either of the following manners. Details are as follows.

1. The M candidate frequency positions may belong to a first set or a second set. For example, when the M candidate frequency positions are associated with M synchronization raster positions, the M candidate frequency positions may belong to the first set or the second set. In other words, when the M candidate frequency positions are associated with the M synchronization raster positions, the M candidate frequency positions may be determined through the first set or the second set. A quantity of candidate frequency positions included in the first set or the second set may be greater than or equal to M. When the quantity of candidate frequency positions included in the first set or the second set is greater than M, the M candidate frequency positions may be first M candidate frequency positions, last M candidate frequency positions, or any M candidate frequency positions in the first set or the second set, which is not limited herein.

Optionally, a candidate frequency position in the first set satisfies the following formula: F1 + L1 * First frequency spacing + K1 * Second frequency spacing, where F1 is a reference frequency position of a frequency range to which the candidate frequency positions in the first set belong, L1 is an integer greater than or equal to 0, and K1 is an integer greater than or equal to 0. It should be noted that the frequency range mentioned in this application may include an interval determined by a maximum frequency position and a minimum frequency position, and the frequency range may further include a boundary point or may not include a boundary point, for example, the maximum frequency position and/or the minimum frequency position. The reference frequency position mentioned in this application may be any frequency position in the frequency range, for example, a start frequency position. Optionally, the first frequency spacing is different from the second frequency spacing. For example, a size of the first frequency spacing is greater than a bandwidth of an SSB in the synchronization burst set, and a size of the second frequency spacing is greater than or equal to a bandwidth of an SSB in the synchronization burst set. The following uses an example in which M is 4. For example, the frequency range to which the candidate frequency positions in the first set belong is [3000 MHz, 24250 MHz], the reference frequency position is 3000 MHz (3000 MHz is a start frequency position in the frequency range), the first frequency spacing is 14.4 MHz, and the second frequency spacing is 3.6 MHz. In this case, the candidate frequency position in the first set satisfies the following formula: 3000 MHz + L1 * 14.4 MHz + K1 * 3.6 MHz, where L1=0, 1, 2, ..., 1475, and K1=0, 1, ..., 3. In this case, for four candidate frequency positions, refer to 4-1 in FIG. 4, which are respectively 3000 MHz, 3003.6 MHz, 3007.2 MHz, and 30010.8 MHz. For another example, the frequency range to which the candidate frequency positions in the first set belong is [24250 MHz, 100 GHz], the reference frequency position is 24250.08 MHz (24250.08 MH is greater than a start frequency position 24250 MHz in the frequency range), the first frequency spacing is 115.2 MHz, and the second frequency spacing is 28.8 MHz. In this case, the candidate frequency position in the first set satisfies the following formula: 24250.08 MHz + L1 * 115.2 MHz + K1 * 28.8 MHz, where L1=0, 1, 2, ..., 2630, and K1=0, 1, ..., 3. In this case, for four candidate frequency positions, refer to 4-2 in FIG. 4, which are respectively 24250.08 MHz, 24278.88 MHz, 24307.68 MHz, and 24336.48 MHz.

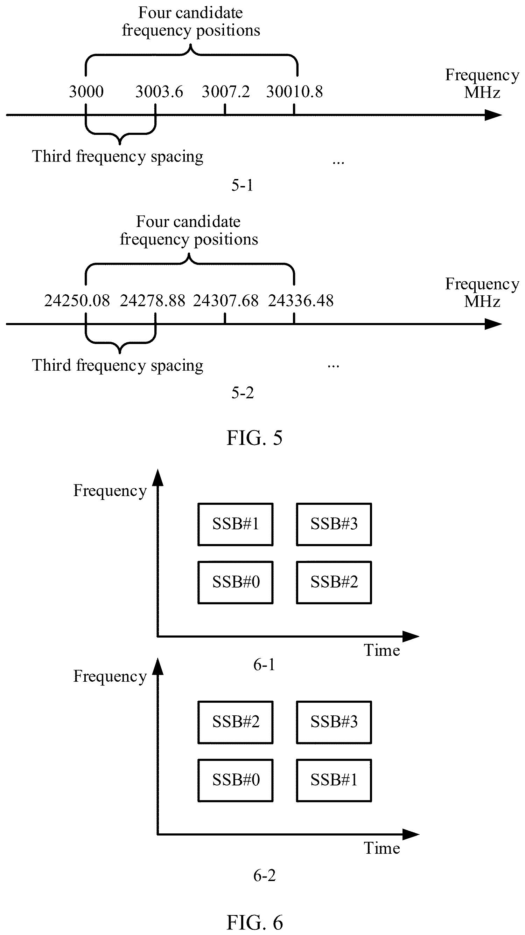

Optionally, a candidate frequency position in the second set satisfies the following formula: F2 + L2 * Third frequency spacing, where F2 is a reference frequency position of a frequency range to which the candidate frequency positions in the second set belong, and L2 is an integer greater than or equal to 0. Optionally, a size of the third frequency spacing is greater than or equal to a bandwidth of an SSB in the synchronization burst set. The following uses an example in which M is 4. For example, the frequency range to which the candidate frequency positions in the second set belong is [3000 MHz, 24250 MHz], the reference frequency position is 3000 MHz (3000 MHz is a start frequency position in the frequency range), and the third frequency spacing is 3.6 MHz. In this case, the candidate frequency position in the second set satisfies the following formula: 3000 MHz + L2 * 3.6 MHz, where L2=0, 1, 2, ..., 5902. In this case, for four candidate frequency positions, refer to 5-1 in FIG. 5, which are respectively 3000 MHz, 3003.6 MHz, 3007.2 MHz, and 30010.8 MHz. For another example, the frequency range to which the candidate frequency positions in the second set belong is [24250 MHz, 100 GHz], the reference frequency position is 24250.08 MHz (24250.08 MH is greater than a start frequency position 24250 MHz in the frequency range), and the third frequency spacing is 28.8 MHz. In this case, the candidate frequency position in the second set satisfies the following formula: 24250.08 MHz + L2 * 28.8 MHz, where L2=0, 1, 2, ..., 2630. In this case, for four candidate frequency positions, refer to 5-2 in FIG. 5, which are respectively 24250.08 MHz, 24278.88 MHz, 24307.68 MHz, and 24336.48 MHz.

2. A first candidate frequency position of the M candidate frequency positions is associated with one synchronization raster position. In other words, the first candidate frequency position is corresponding to one synchronization raster position. A correspondence (that is, a correspondence between the first candidate frequency position and the synchronization raster position) is predefined or preconfigured. M-1 candidate frequency positions of the M candidate frequency positions other than the first candidate frequency position may be determined based on the first candidate frequency position and/or frequency spacing between adjacent candidate frequency positions of the M candidate frequency positions. In other words, when the M candidate frequency positions are associated with one synchronization raster position, the first candidate frequency position of the M candidate frequency positions is associated with one synchronization raster position, and the M-1 candidate frequency positions of the M candidate frequency positions other than the first candidate frequency position may be determined based on the first candidate frequency position and/or the frequency spacing between adjacent candidate frequency positions of the M candidate frequency positions.

Optionally, when M is an odd number, the first candidate frequency position is an $[(M+1)/2]^{th}$ candidate frequency position (counting from 1) of the M candidate frequency positions; or when M is an even number, the first candidate frequency position is an $(M/2)^{th}$ candidate frequency position or an $(M/2+1)^{th}$ candidate frequency position (counting from 1) of the M candidate frequency positions. In such a design, an intermediate SSB of a plurality of SSBs that can be multiplexed in a frequency division manner can be enabled to be located at a predefined frequency position, to help the terminal device adjust an operating frequency range of a radio frequency link of the terminal device when SSB search and detection are performed, thereby reducing complexity of the terminal device.

Optionally, the frequency spacing between adjacent candidate frequency positions of the M candidate frequency positions is predefined or preconfigured, or the frequency spacing between adjacent candidate frequency positions of the M candidate frequency positions is indicated by the network device to the terminal device. For example, the frequency spacing between adjacent candidate frequency positions of the M candidate frequency positions may be a bandwidth of an SSB in the synchronization burst set. For another example, the frequency spacing between adjacent candidate frequency positions of the M candidate frequency positions is related to a frequency band, and frequency spacing between adjacent candidate frequency positions of the M candidate frequency positions in different frequency bands may be different. For example, the SSB occupies 240 REs in frequency domain. For a frequency band 1, frequency spacing between adjacent candidate frequency positions of the M candidate frequency positions may be a bandwidth (that is, 3.6 MHz) of the SSB in the synchronization burst set at subcarrier spacing of 15 kHz. For a frequency band 2, frequency spacing between adjacent candidate frequency positions of the M candidate frequency positions may be a bandwidth (that is, 7.2 MHz) of the SSB in the synchronization burst set at subcarrier spacing of 30 kHz. It can be learned that, the frequency spacing between adjacent candidate frequency positions of the M candidate frequency positions in the frequency band 1 is different from the frequency spacing between adjacent candidate frequency positions of the M candidate frequency positions in the frequency band 2.

Optionally, an RE of an SSB in the synchronization burst set may be located at one of the M candidate frequency positions. For example, that one of the M candidate frequency positions is used to transmit one SSB in the synchronization burst set may be understood as that an RE of the SSB in the synchronization burst set may be located at one of the M candidate frequency positions. The RE may be a central RE of the SSB in the synchronization burst set, a $1^{st}$ RE of the SSB, a last RE of the SSB, any RE of the SSB, or the like. This is not limited herein. For example, the SSB in the synchronization burst set occupies 240 REs in frequency domain, the central RE is the $120^{th}$ RE (counting from 0), the $1^{st}$ RE is the $0^{th}$ RE, and the last RE may be the $239^{th}$ RE. That is, the $120^{th}$ RE, the $0^{th}$ RE, or the $239^{th}$ RE may be located at one of the M candidate frequency positions. For another example, when M is an even number, the RE may be a last RE of an $(M/2)^{th}$ SSB or a $1^{st}$ RE (counting from 1) of an $(M/2+1)^{th}$ SSB. For another example, when M is an odd number, the RE may be a central RE (counting from 1) of an $(M+1)^{th}$ SSB. In the foregoing design, frequency centers of a plurality of SSBs that can be multiplexed in a frequency division manner can be enabled to be located at a predefined frequency position, to help the terminal device adjust an operating frequency range of a radio frequency link of the terminal device when SSB search and detection are performed, thereby reducing complexity of the terminal device.

Optionally, a maximum quantity of frequency division-based SSBs in the synchronization burst set is a predefined or preconfigured value, for example, 2, 4, 8, 16, 32, or 64. In a possible implementation, the maximum quantity of frequency division-based SSBs in the synchronization burst set may be determined based on a frequency range to which the M candidate frequency positions belong. In other words, the maximum quantity of frequency division-based SSBs in the synchronization burst set may be determined based on a frequency range of a cell to which the SSBs belong. For example, the frequency range to which the M candidate frequency positions belong is less than or equal to 3 gigahertz (GHz), and the maximum quantity of frequency division-based SSBs in the synchronization burst set is 4; the frequency range to which the M candidate frequency positions belong is greater than 3 GHz and less than or equal to 6 GHz, and the maximum quantity of frequency division-based SSBs in the synchronization burst set is 8; and the frequency range to which the M candidate frequency positions belong is greater than 6 GHz, and the maximum quantity of frequency division-based SSBs in the synchronization burst set is 8, 16, 32, or 64.

Optionally, step 303 may be understood as follows: The network device sends, in the at least two candidate frequency positions and at least two candidate time-domain positions, the at least two SSBs to the terminal device. In other words, a plurality of SSBs in the synchronization burst set may be transmitted in both frequency division multiplexing and time division multiplexing manners. For example, the synchronization burst set includes four SSBs, a maximum of two frequency division-based SSBs are supported in frequency domain, and a maximum of two time-divided SSBs are supported in time domain. In a possible implementation, the SSBs in the synchronization burst set are consecutively mapped to a pattern of candidate time-frequency positions of the SSBs in the synchronization burst set firstly in ascending order of indexes of frequency-domain units and then in ascending order of indexes of time units. For example, the synchronization burst set includes four SSBs, a maximum of two frequency division-based SSBs are supported in frequency domain, and a maximum of two time-divided SSBs are supported in time domain. Candidate time-frequency positions of the four SSBs are shown in FIG. 6-1. In another possible implementation, the SSBs in the synchronization burst set are consecutively mapped to a pattern of candidate time-frequency positions of the SSBs in the synchronization burst set firstly in ascending order of indexes of time units and then in ascending order of indexes of frequency-domain units. For example, the synchronization burst set includes four SSBs, a maximum of two frequency division-based SSBs are supported in frequency domain, and a maximum of two time-divided SSBs are supported in time domain. Candidate time-frequency positions of the four SSBs are shown in FIG. 6-2.

The candidate time-frequency position in this application includes a candidate frequency position and a candidate time-domain position. For the candidate frequency positions herein, reference may be made to the M candidate frequency positions. The candidate time-domain position herein may be in a half-frame of a system frame, in other words, the candidate time-domain position is determined through the system frame, the half-frame, and a position in the half-frame. An absolute time length of the system frame is 10 ms, and may be divided, by using 5 ms as half-frame time, into two half-frames, that is, a former half-frame and a latter half-frame. Optionally, at least one of the system frame, the half-frame, or the position in the half-frame may be predefined or preconfigured. In a possible implementation, the system frame and the half-frame may be indicated by the network device to the terminal device, for example, indicated to the terminal device through a PBCH. The position in the half-frame is predefined, preconfigured, or indicated by the network device to the terminal device, for example, indicated to the terminal device through the PBCH. For example, when subcarrier spacing of the SSBs in the synchronization burst set is 120 kHz, the position in the half-frame may be one of the following positions: {4, 8, 16, 20} + 28.n, where n=0, 1, 2, 3, 5, 6, 7, 8, 10, 11, 12, 13, 15, 16, 17, 18.

The ascending order of indexes mentioned in this application may also be understood as an increasing order of indexes. For example, one slot includes 14 symbols, and the 14 symbols are arranged in ascending order or increasing order of indexes. Optionally, the ascending order of indexes of time units may also be understood as that the indexes of time units are arranged from front to back. For example, one slot includes 14 symbols, a symbol whose index is 0 is located before a symbol whose index is 1, and the symbol whose index is 1 is located before a symbol whose index is 2. The same applies to the rest. Optionally, the ascending order or increasing order of the indexes of the frequency-domain units may be understood as an ascending order of candidate frequency-domain positions.

Optionally, the pattern of the candidate time-frequency positions of the SSBs in the synchronization burst set is predefined or preconfigured, or the pattern of the candidate time-frequency positions of the SSBs in the synchronization burst set is indicated by the network device to the terminal device. Optionally, the pattern of the candidate time-frequency positions of the SSBs in the synchronization burst set may belong to a first pattern, and the first pattern is a predefined or preconfigured candidate time-frequency position of the SSBs. A quantity of SSBs supported by the first pattern may be greater than or equal to a quantity of SSBs in the synchronization burst set. In other words, the quantity of SSBs supported by the first pattern may be greater than or equal to a maximum quantity of SSBs supported by a cell covered by the network device. When the quantity of SSBs supported by the first pattern is greater than the maximum quantity of SSBs supported by the cell covered by the network device, there may be the following implementations. Details are as follows.

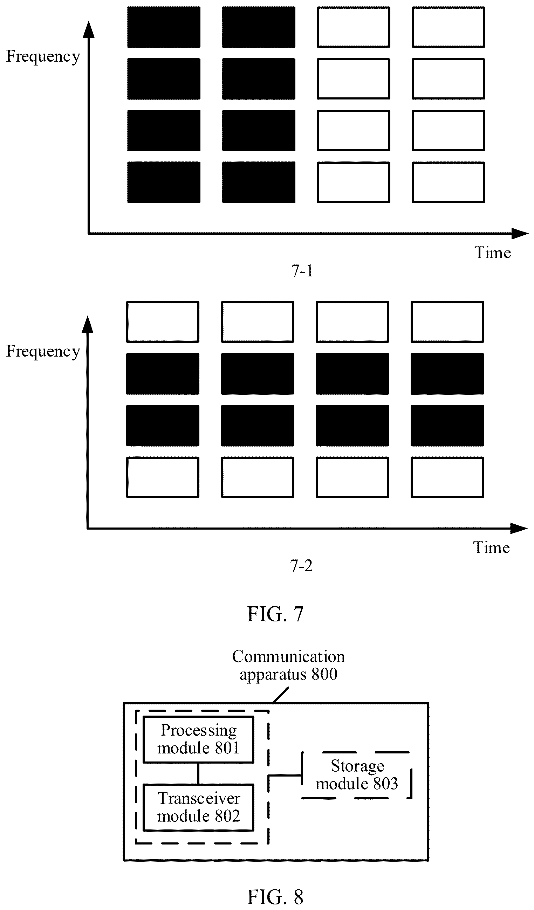

1. The network device may consecutively select, in the first pattern, firstly in ascending order of indexes of frequency-domain units and then in ascending order of indexes of time units, one or more candidate time-frequency positions as the candidate time-frequency positions of the SSBs in the synchronization burst set. For example, the first pattern includes 16 candidate time-frequency positions, the maximum quantity of SSBs supported by the cell covered by the network device is 8, and the network device may select eight candidate time-frequency positions from the 16 candidate time-frequency positions, to send the SSBs in the synchronization burst set. As shown in 7-1 in FIG. 7, the 8 candidate time-frequency positions are the 1st column and the 2nd column from left to right, that is, parts filled with black in 7-1 in FIG. 7.

2. The network device may randomly select one or more candidate time-frequency positions from the first pattern as the candidate time-frequency positions of SSBs in the synchronization burst set. For example, the first pattern includes 16 candidate time-frequency positions, the maximum quantity of SSBs supported by the cell covered by the network device is 8, and the network device may select eight candidate time-frequency positions from the 16 candidate time-frequency positions, to send the SSBs in the synchronization burst set. As shown in 7-2 in FIG. 7, the eight candidate time-frequency positions are the 2nd row and the 3rd row from top to bottom, that is, parts filled with black in 7-2 in FIG. 7.

Optionally, a period of an SSB in the synchronization burst set may be the same as or different from a period of the synchronization burst set. For example, when the period of the SSB in the synchronization burst set is the same as the period of the synchronization burst set, the period of the SSB in the synchronization burst set and the period of the synchronization burst set are less than 5 milliseconds. For another example, when the period of the SSB in the synchronization burst set is different from the period of the synchronization burst set, the period of the synchronization burst set is greater than or equal to 5 milliseconds, and the period of the SSB in the synchronization burst set is less than 5 milliseconds.

It should be noted that the period of the synchronization burst set refers to a period in which all SSBs in the synchronization burst set are repeatedly sent.

It can be learned that in the foregoing implementation, as some or all SSBs in the synchronization burst set are transmitted in a frequency division multiplexing manner, time taken by the terminal device for SSB search can be reduced, so that the terminal device can perform synchronization based on a found SSB more quickly and initiate random access, and therefore, an access latency of the terminal device can be reduced. In addition, the network device may complete sending the SSBs in the synchronization burst set in shorter time. In this way, the network device can be shut down in shorter time as required, so that energy consumption of the network device can be reduced, thereby facilitating energy saving of the network device.

The foregoing mainly describes the solutions provided in this application from a perspective of interaction between the devices. It may be understood that, to implement the foregoing functions, each device includes a corresponding hardware structure and/or software module for performing each function. A person skilled in the art should easily be aware that, in combination with units and algorithm steps of the examples described in embodiments disclosed in this specification, this application may be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the terminal device or the network device may be divided into functional modules based on the foregoing method examples. For example, each functional module may be obtained through division based on a corresponding function, or two or more functions may be integrated into one processing module. The integrated module may be implemented in a form of hardware, or may be implemented in a form of a software functional module. It should be noted that, in embodiments of this application, module division is an example, and is merely a logical function division. In actual implementation, another division manner may be used.

FIG. 8 is a diagram of a structure of a communication apparatus according to an embodiment of this application. The communication apparatus 800 may be used in the method shown in the embodiment in FIG. 3. As shown in FIG. 8, the communication apparatus 800 includes a processing module 801 and a transceiver module 802. The processing module 801 may be one or more processors, and the transceiver module 802 may be a transceiver or a communication interface. The communication apparatus may be configured to implement a function of the terminal device or the network device in any one of the foregoing method embodiments, or configured to implement a function of a network element in any one of the foregoing method embodiments. The network element or network function may be a network element in a hardware device, a software function running on dedicated hardware, or a virtualized function instantiated on a platform (for example, a cloud platform). Optionally, the communication apparatus 800 may further include a storage module 803, configured to store program code and data that are of the communication apparatus 800.

In an instance, the communication apparatus is used as a terminal device or a chip used in the terminal device, and performs the steps performed by the terminal device in the foregoing method embodiments. The transceiver module 802 is specifically configured to perform a sending action and/or a receiving action performed by the terminal device in the embodiment in FIG. 3, for example, support the terminal device in performing another process of the technology described in this specification. The processing module 801 may be configured to support the communication apparatus 800 in performing a processing action in the foregoing method embodiments, for example, support the terminal device in performing another process of the technology described in this specification.

For example, the processing module 801 is configured to determine M candidate frequency positions, where one of the M candidate frequency positions is used to transmit one synchronization signal block SSB in a synchronization burst set, the synchronization burst set includes N SSBs, and both M and N are integers greater than or equal to 2. The transceiver module 802 is configured to receive, based on at least two candidate frequency positions of the M candidate frequency positions, at least two SSBs of the N SSBs from the network device, and the at least two SSBs are associated with different index values.

Optionally, when receiving, based on the at least two candidate frequency positions of the M candidate frequency positions, the at least two SSBs of the N SSBs from the network device, the processing module 801 is configured to receive, based on the at least two candidate frequency positions and at least two candidate time-domain positions, the at least two SSBs from the network device.

In another instance, the communication apparatus is used as a network device or a chip used in the network device, and performs the steps performed by the network device in the foregoing method embodiments. The transceiver module 802 is specifically configured to perform a sending action and/or a receiving action performed by the network device in the embodiment in FIG. 3, for example, support the network device in performing another process of the technology described in this specification. The processing module 801 may be configured to support the communication apparatus 800 in performing a processing action in the foregoing method embodiments, for example, support the network device in performing another process of the technology described in this specification.

For example, the processing module 801 is configured to determine M candidate frequency positions, where one of the M candidate frequency positions is used to transmit one synchronization signal block SSB in a synchronization burst set, the synchronization burst set includes N SSBs, and both M and N are integers greater than or equal to 2. The transceiver module 802 is configured to send, in at least two candidate frequency positions of the M candidate frequency positions, at least two SSBs of the N SSBs to the terminal device, and the at least two SSBs are associated with different index values.

Optionally, when sending, in the at least two candidate frequency positions of the M candidate frequency positions, the at least two SSBs of the N SSBs to the terminal device, the transceiver module 802 is configured to send, in the at least two candidate frequency positions and at least two candidate time-domain positions, the at least two SSBs to the terminal device.

In a possible implementation, when the terminal device or the network device is a chip, the transceiver module 802 may be a communication interface, a pin, a circuit, or the like. The communication interface may be configured to input to-be-processed data to a processor, and may output a processing result of the processor to the outside. During specific implementation, the communication interface may be a general-purpose input/output (general-purpose input/output, GPIO) interface, and may be connected to a plurality of peripheral devices (for example, a display (LCD), a camera (camera), a radio frequency (radio frequency, RF) module, and an antenna). The communication interface is connected to the processor through a bus.

The processing module 801 may be a processor. The processor may execute computer-executable instructions stored in the storage module, so that the chip performs the method in the embodiment of FIG. 3. Further, the processor may include a controller, an arithmetic logic unit, and a register. For example, the controller is mainly responsible for instruction decoding, and sending a control signal for an operation corresponding to the instructions. The arithmetic logic unit is mainly responsible for performing a fixed-point or floating-point arithmetic operation, a shift operation, a logic operation, and the like, and may also perform an address operation and address translation. The register is mainly responsible for saving a quantity of register operations, intermediate operation results, and the like that are temporarily stored during instruction execution. During specific implementation, a hardware architecture of the processor may be an ASIC architecture, a microprocessor without interlocked piped stages architecture (microprocessor without interlocked piped stages architecture, MIPS), an advanced reduced instruction set computer machine (advanced RISC machine, ARM) architecture, a second processor (network processor, NP) architecture, or the like. The processor may be a single-core processor or a multicore processor. The storage module may be a storage module inside the chip, for example, a register or a cache. Alternatively, the storage module may also be a storage module outside the chip, for example, a ROM, another type of static storage device that can store static information and instructions, or a RAM.

It should be noted that functions respectively corresponding to the processor and the interface may be implemented through a hardware design, or may be implemented through a software design, or may be implemented through a combination of software and hardware. This is not limited herein.

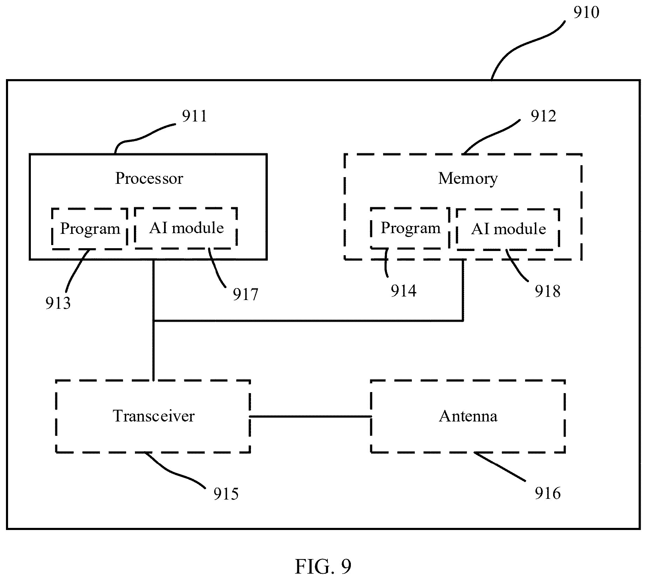

FIG. 9 is a diagram of a structure of another communication apparatus according to an embodiment of this application. It may be understood that the communication apparatus 910 includes means in necessary forms, such as a module, a unit, an element, a circuit, or an interface, which are appropriately configured together to perform the solution. The communication apparatus 910 may be the foregoing terminal device or network device, or may be a component (for example, a chip) in these devices, to implement the methods described in the foregoing method embodiments. The communication apparatus 910 includes one or more processors 911. The processor 911 may be a general-purpose processor, a dedicated processor, or the like. For example, the processor may be a baseband processor or a central processing unit. The baseband processor may be configured to process a communication protocol and communication data. The central processing unit may be configured to control the communication apparatus (for example, the terminal device, the network device, or the chip), to execute a software program and process data of the software program.

Optionally, in a design, the processor 911 may include a program 913 (which may also be referred to as code or instructions sometimes), and the program 913 may be run on the processor 911, so that the communication apparatus 910 performs the methods described in the foregoing embodiments. In another possible design, the communication apparatus 910 includes a circuit (not shown in FIG. 9), and the circuit is configured to implement a function of the terminal device, the network device, or the like in the foregoing embodiments. Optionally, the communication apparatus 910 may include one or more memories 912 storing a program 914 (which may also be referred to as code or instructions sometimes), and the program 914 may be run on the processor 911, so that the communication apparatus 910 performs the methods described in the foregoing method embodiments.

Optionally, the processor 911 and/or the memory 912 may include an AI module 917 and an AI module 918, and the AI module is configured to implement an AI-related function. The AI module may be implemented through software, hardware, or a combination of the software and the hardware. For example, the AI module may include an RIC module. For example, the AI module may be a near-real-time RIC or a non-real-time RIC. Optionally, the processor 911 and/or the memory 912 may further store data. The processor and the memory may be separately disposed, or may be integrated together.

Optionally, the communication apparatus 910 may further include a transceiver 915 and/or an antenna 916. The processor 911 may also be referred to as a processing unit sometimes, and controls the communication apparatus (for example, the terminal device or the network device). The transceiver 915 may also be referred to as a transceiver unit, a transceiver machine, a transceiver circuit, a transceiver, or the like sometimes, and is configured to implement receiving and sending functions of the communication apparatus through the antenna 916.

An embodiment of this application further provides a communication apparatus. The communication apparatus includes at least one processor and a memory. The memory is configured to store a computer program or instructions. The at least one processor is configured to execute the computer program or the instructions in the memory, to perform the method in any one of the implementations in the embodiment of FIG. 3.

An embodiment of this application further provides a computer-readable storage medium. The computer-readable storage medium stores computer instructions. When the computer instructions are executed, a computer is enabled to perform the method in any one of the implementations in the embodiment of FIG. 3.

An embodiment of this application further provides a computer program product. The computer program product includes computer program code. When the computer program code is run by a computer, the computer is enabled to perform the method in any one of the implementations in the embodiment of FIG. 3.

An embodiment of this application further provides a chip. The chip includes at least one processor and an interface. The processor is configured to read and execute instructions stored in a memory. When the instructions are run, the chip is enabled to perform the method in any one of the implementations in the embodiment of FIG. 3.

The foregoing units described as separate parts may or may not be physically separate, and parts displayed as units may or may not be physical units, may be located in one position, or may be distributed on a plurality of network units. Some or all of the units may be selected based on an actual requirement, to achieve the objectives of the solutions in embodiments of this application. In addition, network element units in embodiments of this application may be integrated into one processing unit, each of the units may exist alone physically, or two or more units are integrated into one unit. The foregoing integrated unit may be implemented in a form of hardware, or may be implemented in a form of a software network element unit.

When the foregoing integrated unit is implemented in the form of the software network element unit and sold or used as an independent product, the integrated unit may be stored in a computer-readable storage medium. Based on such an understanding, an essentially contributing part in the technical solutions of this application or all or a part of the technical solutions may be embodied in a form of a software product. The computer software product is stored in a storage medium and includes several instructions for instructing a computer device (which may be a personal computer, a terminal device, a cloud server, a network device, or the like) to perform all or some of the steps of the method in embodiments of this application. The foregoing storage medium includes any medium that can store program code, for example, a USB flash drive, a removable hard disk, a read-only memory (ROM, Read-Only Memory), a random access memory (RAM, Random Access Memory), a magnetic disk, or an optical disc. The foregoing descriptions are merely specific implementations of this application, but are not intended to limit the protection scope of this application. Any modification or replacement readily figured out by a person skilled in the art within the technical scope disclosed in this application shall fall within the protection scope of this application. Therefore, the protection scope of this application shall be subject to the protection scope of the claims.

## Claims

1. A communication method, comprising:

   determining M candidate frequency positions, wherein one of the M candidate frequency positions is used to transmit one synchronization signal block SSB in a synchronization burst set, the synchronization burst set comprises N SSBs, and both M and N are integers greater than or equal to 2; and
   receiving, based on at least two candidate frequency positions of the M candidate frequency positions, at least two SSBs of the N SSBs from a network device, wherein the at least two SSBs are associated with different index values.

2. The method according to claim 1, wherein

   the M candidate frequency positions are associated with M synchronization raster positions; or
   the M candidate frequency positions are associated with one synchronization raster position.

3.  The method according to claim 2, wherein that the M candidate frequency positions are associated with one synchronization raster position comprises: a first candidate frequency position of the M candidate frequency positions is associated with one synchronization raster position; and

M-1 candidate frequency positions of the M candidate frequency positions other than the first candidate frequency position are determined based on the first candidate frequency position and/or frequency spacing between adjacent candidate frequency positions of the M candidate frequency positions, wherein the frequency spacing between adjacent candidate frequency positions of the M candidate frequency positions is predefined, or the frequency spacing between adjacent candidate frequency positions of the M candidate frequency positions is indicated by the network device to a terminal device.

4.  The method according to claim 3, wherein

when M is an odd number, the first candidate frequency position is an $[(M+1)/2]^{th}$ candidate frequency position of the M candidate frequency positions; and/or
when M is an even number, the first candidate frequency position is an $(M/2)^{th}$ candidate frequency position or an $(M/2+1)^{th}$ candidate frequency position of the M candidate frequency positions.

5.  The method according to any one of claims 1 to 4, wherein a resource element RE of an SSB in the synchronization burst set is located at one of the M candidate frequency positions; and
the RE is a central RE of the SSB in the synchronization burst set, a $1^{st}$ RE of the SSB in the synchronization burst set, or a last RE of the SSB in the synchronization burst set.

6.  The method according to any one of claims 1 to 5, wherein a maximum quantity of frequency division-based SSBs in the synchronization burst set is determined based on a frequency range to which the M candidate frequency positions belong.

7.  The method according to any one of claims 1 to 6, wherein the M candidate frequency positions belong to a first set, and a candidate frequency position in the first set satisfies the following formula:

$$F1 + L1 * \text{First frequency spacing} + K1 * \text{Second frequency spacing},$$

wherein F1 is a reference frequency position of a frequency range to which the candidate frequency positions in the first set belong, L1 is an integer greater than or equal to 0, K1 is an integer greater than or equal to 0, and the first frequency spacing is different from the second frequency spacing.

8.  The method according to claim 7, wherein a size of the first frequency spacing is greater than a bandwidth of an SSB in the synchronization burst set, and/or a size of the second frequency spacing is greater than or equal to a bandwidth of an SSB in the synchronization burst set.

9.  The method according to any one of claims 1 to 6, wherein the M candidate frequency positions belong to a second set, and a candidate frequency position in the second set satisfies the following formula:

$$F2 + L2 * \text{Third frequency spacing},$$

wherein F2 is a reference frequency position of a frequency range to which the candidate frequency positions in the second set belong, and L2 is an integer greater than or equal to 0.

10. The method according to claim 9, wherein a size of the third frequency spacing is greater than or equal to a bandwidth of an SSB in the synchronization burst set.

11. The method according to any one of claims 1 to 10, wherein the receiving, based on the at least two candidate frequency positions of the M candidate frequency positions, the at least two SSBs of the N SSBs from the network device comprises:
receiving, based on the at least two candidate frequency positions and at least two candidate time-domain positions, the at least two SSBs from the network device.

12. The method according to any one of claims 1 to 11, wherein

the SSBs in the synchronization burst set are consecutively mapped to a pattern of candidate time-frequency positions of the SSBs in the synchronization burst set firstly in ascending order of indexes of frequency-domain units and then in ascending order of indexes of time units; or
the SSBs in the synchronization burst set are consecutively mapped to a pattern of candidate time-frequency positions of the SSBs in the synchronization burst set firstly in ascending order of indexes of time units and then in ascending order of indexes of frequency-domain units; and
the pattern of the candidate time-frequency positions of the SSBs in the synchronization burst set is predefined or preconfigured, or the pattern of the candidate time-frequency positions of the SSBs in the synchronization burst set is indicated by the network device to the terminal device.

13. The method according to any one of claims 1 to 12, wherein a period of an SSB in the synchronization burst set is the same as or different from a period of the synchronization burst set.

14. The method according to claim 13, wherein the period of the SSB in the synchronization burst set is the same as the period of the synchronization burst set, and both the period of the SSB in the synchronization burst set and the period of the synchronization burst set are less than 5 milliseconds.

15. The method according to claim 13, wherein the period of the SSB in the synchronization burst set is different from the period of the synchronization burst set, the period of the synchronization burst set is greater than or equal to 5 milliseconds, and the period of the SSB in the synchronization burst set is less than 5 milliseconds.

16. A communication method, comprising:

determining M candidate frequency positions, wherein one of the M candidate frequency positions is used to transmit one synchronization signal block SSB in a synchronization burst set, the synchronization burst set comprises N SSBs, and both M and N are integers greater than or equal to 2; and
sending, in at least two candidate frequency positions of the M candidate frequency positions, at least two SSBs of the N SSBs to a terminal device, wherein the at least two SSBs are associated with different index values.

17. The method according to claim 16, wherein

the M candidate frequency positions are associated with M synchronization raster positions; or
the M candidate frequency positions are associated with one synchronization raster position.

18. The method according to claim 17, wherein that the M candidate frequency positions are associated with one synchronization raster position comprises: a first candidate frequency position of the M candidate frequency positions is associated with one synchronization raster position; and

M-1 candidate frequency positions of the M candidate frequency positions other than the first candidate frequency position are determined based on the first candidate frequency position and/or frequency spacing between adjacent candidate frequency positions of the M candidate frequency positions, wherein
the frequency spacing between adjacent candidate frequency positions of the M candidate frequency positions is predefined, or the frequency spacing between adjacent candidate frequency positions of the M candidate frequency positions is indicated by a network device to the terminal device.

19. The method according to claim 18, wherein

when M is an odd number, the first candidate frequency position is an $[(M+1)/2]^{th}$ candidate frequency position of the M candidate frequency positions; and/or
when M is an even number, the first candidate frequency position is an $(M/2)^{th}$ candidate frequency position or an $(M/2+1)^{th}$ candidate frequency position of the M candidate frequency positions.

20. The method according to any one of claims 16 to 19, wherein

a resource element RE of an SSB in the synchronization burst set is located at one of the M candidate frequency positions; and

the RE is a central RE of the SSB in the synchronization burst set, a 1st RE of the SSB in the synchronization burst set, or a last RE of the SSB in the synchronization burst set.

21. The method according to any one of claims 16 to 20, wherein a maximum quantity of frequency division-based SSBs in the synchronization burst set is determined based on a frequency range to which the M candidate frequency positions belong.

22. The method according to any one of claims 16 to 21, wherein the M candidate frequency positions belong to a first set, and a candidate frequency position in the first set satisfies the following formula:

$$F1 + L1 * \text{First frequency spacing} + K1 * \text{Second frequency spacing},$$

wherein F1 is a reference frequency position of a frequency range to which the candidate frequency positions in the first set belong, L1 is an integer greater than or equal to 0, K1 is an integer greater than or equal to 0, and the first frequency spacing is different from the second frequency spacing.

23. The method according to claim 22, wherein a size of the first frequency spacing is greater than a bandwidth of an SSB in the synchronization burst set, and/or a size of the second frequency spacing is greater than or equal to a bandwidth of an SSB in the synchronization burst set.

24. The method according to any one of claims 16 to 21, wherein the M candidate frequency positions belong to a second set, and a candidate frequency position in the second set satisfies the following formula:

$$F2 + L2 * \text{Third frequency spacing},$$

wherein F2 is a reference frequency position of a frequency range to which the candidate frequency positions in the second set belong, and L2 is an integer greater than or equal to 0.

25. The method according to claim 24, wherein a size of the third frequency spacing is greater than or equal to a bandwidth of an SSB in the synchronization burst set.

26. The method according to any one of claims 16 to 25, wherein the sending, in the at least two candidate frequency positions of the M candidate frequency positions, the at least two SSBs of the N SSBs to the terminal device comprises:

sending, in the at least two candidate frequency positions and at least two candidate time-domain positions, the at least two SSBs to the terminal device.

27. The method according to any one of claims 16 to 26, wherein

the SSBs in the synchronization burst set are consecutively mapped to a pattern of candidate time-frequency positions of the SSBs in the synchronization burst set firstly in ascending order of indexes of frequency-domain units and then in ascending order of indexes of time units; or
the SSBs in the synchronization burst set are consecutively mapped to a pattern of candidate time-frequency positions of the SSBs in the synchronization burst set firstly in ascending order of indexes of time units and then in ascending order of indexes of frequency-domain units; and
the pattern of the candidate time-frequency positions of the SSBs in the synchronization burst set is predefined or preconfigured, or the pattern of the candidate time-frequency positions of the SSBs in the synchronization burst set is indicated by the network device to the terminal device.

28. The method according to any one of claims 16 to 27, wherein a period of an SSB in the synchronization burst set is the same as or different from a period of the synchronization burst set.

29. The method according to claim 28, wherein the period of the SSB in the synchronization burst set is the same as the period of the synchronization burst set, and both the period of the SSB in the synchronization burst set and the period of the synchronization burst set are less than 5 milliseconds.

30. The method according to claim 28, wherein the period of the SSB in the synchronization burst set is different from the period of the synchronization burst set, the period of the synchronization burst set is greater than or equal to 5 milliseconds, and the period of the SSB in the synchronization burst set is less than 5 milliseconds.

31. A communication apparatus, comprising a unit or a module configured to implement the method according to any one of claims 1 to 30.

32. A communication apparatus, wherein the communication apparatus comprises at least one processor and a memory, the memory is configured to store a computer program or instructions, and the at least one processor is configured to execute the computer program or the instructions in the memory, to perform the method according to any one of claims 1 to 30.

33. A communication system, wherein the communication system comprises a terminal device and a network device;

   the terminal device is configured to perform the method according to any one of claims 1 to 15; and
   the network device is configured to perform the method according to any one of claims 16 to 30.

34. A computer-readable storage medium, wherein the computer-readable storage medium stores computer instructions, and when the computer instructions are executed, the computer is enabled to perform the method according to any one of claims 1 to 30.

35. A computer program product, wherein the computer program product comprises computer program code, and when the computer program code is run on a computer, the computer is enabled to perform the method according to any one of claims 1 to 30.

36. A chip, wherein the chip comprises at least one processor and an interface, the processor is configured to read and execute instructions stored in a memory, and when the instructions are run, the chip is enabled to perform the method according to any one of claims 1 to 30.

FIG. 1

FIG. 2

Terminal device

Network device

301: Determine M candidate frequency positions, where one of the M candidate frequency positions is used to transmit one SSB in a synchronization burst set, the synchronization burst set includes N SSBs, and both M and N are integers greater than or equal to 2

302: Determine the M candidate frequency positions

303: Send, in at least two candidate frequency positions of the M candidate frequency positions, at least two SSBs of the N SSBs to the terminal device, where the at least two SSBs are associated with different index values

FIG. 3

Four candidate frequency positions

3000   3003.6   3007.2   30010.8   3014.4

Frequency MHz

Second frequency spacing    ...

First frequency spacing

4-1

Four candidate frequency positions

24250.08   24278.88   24307.68   24336.48   24365.28

Frequency MHz

Second frequency spacing    ...

First frequency spacing

4-2

FIG. 4

Four candidate
frequency positions

3000    3003.6   3007.2   30010.8

Frequency
MHz

Third frequency spacing                ...

5-1

Four candidate
frequency positions

24250.08  24278.88  24307.68  24336.48

Frequency
MHz

Third frequency spacing                ...

5-2

FIG. 5

Frequency

| SSB#1 | SSB#3 |
| SSB#0 | SSB#2 |

Time

6-1

Frequency

| SSB#2 | SSB#3 |
| SSB#0 | SSB#1 |

Time

6-2

FIG. 6

7-1

7-2

FIG. 7

Communication
apparatus 800

Processing
module 801

Storage
module 803

Transceiver
module 802

FIG. 8

910

911

912

Processor

Program | AI module

913 917

Memory

Program | AI module

914 918

Transceiver

Antenna

915 916

FIG. 9

## INTERNATIONAL SEARCH REPORT

| International application No. |
|---|
| **PCT/CN2024/110876** |

| A. | CLASSIFICATION OF SUBJECT MATTER |
|---|---|

H04W72/0453(2023.01)i

According to International Patent Classification (IPC) or to both national classification and IPC

| B. | FIELDS SEARCHED |
|---|---|

Minimum documentation searched (classification system followed by classification symbols)

    IPC:H04W,H04L

Documentation searched other than minimum documentation to the extent that such documents are included in the fields searched

Electronic data base consulted during the international search (name of data base and, where practicable, search terms used)

    3GPP, CNTXT, DWPI, ENTXTC, IEEE: 同步突发集, 同步信号块, 候选, 频分, 频率, 位置, 栅格, 索引, 间隔, SSB, burst, frequency division duplex, FD, candidate, index, raster, slot

| C. | DOCUMENTS CONSIDERED TO BE RELEVANT |
|---|---|

| Category* | Citation of document, with indication, where appropriate, of the relevant passages | Relevant to claim No. |
|---|---|---|
| X | CN 114501671 A (HUAWEI TECHNOLOGIES CO., LTD.) 13 May 2022 (2022-05-13) description, paragraphs [0065]-[0073] and [0126]-[ 0211] | 1-36 |
| X | US 2023021160 A1 (ELECTRONICS AND TELECOMMUNICATIONS RESEARCH INSTITUTE) 19 January 2023 (2023-01-19) description, paragraphs [0139]-[0180] | 1-36 |
| A | WO 2023274491 A1 (NOKIA TECHNOLOGIES OY) 05 January 2023 (2023-01-05) entire document | 1-36 |
| A | CN 112929066 A (GUANGDONG OPPO MOBILE COMMUNICATIONS CO., LTD.) 08 June 2021 (2021-06-08) entire document | 1-36 |

☐ Further documents are listed in the continuation of Box C.     ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **01 November 2024** | **07 November 2024** |

| Name and mailing address of the ISA/CN | Authorized officer |
|---|---|
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

International application No.

**PCT/CN2024/110876**

| Patent document cited in search report | | | Publication date (day/month/year) | Patent family member(s) | | | Publication date (day/month/year) |
|---|---|---|---|---|---|---|---|
| CN | 114501671 | A | 13 May 2022 | WO | 2022100579 | A1 | 19 May 2022 |
| | | | | US | 2023284161 | A1 | 07 September 2023 |
| US | 2023021160 | A1 | 19 January 2023 | KR | 20230007947 | A | 13 January 2023 |
| WO | 2023274491 | A1 | 05 January 2023 | US | 2024291613 | A1 | 29 August 2024 |
| | | | | EP | 4364337 | A1 | 08 May 2024 |
| CN | 112929066 | A | 08 June 2021 | WO | 2019127495 | A1 | 04 July 2019 |
| | | | | CN | 111480373 | A | 31 July 2020 |
| | | | | AU | 2017445212 | A1 | 13 August 2020 |
| | | | | KR | 20200103086 | A | 01 September 2020 |
| | | | | IN | 202027031840 | A | 02 October 2020 |
| | | | | US | 2020329446 | A1 | 15 October 2020 |
| | | | | EP | 3735053 | A1 | 04 November 2020 |
| | | | | JP | 2021514560 | A | 10 June 2021 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202311010367